# EUROPEAN PATENT SPECIFICATION

(11) **EP 2 488 558 B1**
(45) Date of publication and mention of the grant of the patent: **21.01.2015**
(21) Application number: 10840224.9
(22) Date of filing: 07.10.2010
(51) Int. Cl.: C08F 220/06, C08F 222/08, C08L 33/06, C08L 35/00

(54) **PROCESS FOR OBTAINING A BINDER FOR FIBERS AND CURABLE BINDER FOR FIBERS**
VERFAHREN ZUR GEWINNUNG EINES BINDEMITTELS FÜR FASERN UND HÄRTBARES BINDEMITTEL FÜR FASERN
PROCÉDÉ POUR L'OBTENTION D'UN LIANT POUR FIBRES ET LIANT DURCISSABLE POUR FIBRES

(30) Priority: 23.07.2010 RO 201000641; 16.10.2009 RO 200900830
(43) Date of publication of application: 22.08.2012
(73) Proprietor: Dynea Chemicals OY, 00580 Helsinki (FI)
(72) Inventor: MUNTEANU Remus, Judet Brasov (RO)
(74) Representative: Derks, Wilbert
(86) International application number: PCT/RO2010/000015
(87) International publication number: WO 2011/112111

(56) References cited:
- WO-A1-02/051936
- US-A- 5 498 658
- US-A1- 2009 118 424
- TARO OMURA ET AL: "IMPROVEMENT OF THE CROSSLINKING REACTIVITY OF POLYVINYL ACETAL AS AN ALTERNATIVE TO POLYVINYL CHLORIDE", IEEE TRANSACTIONS ON MAGNETICS, IEEE SERVICE CENTER, NEW YORK, NY, US, vol. 32, no. 5, 1 September 1996 (1996-09-01), pages 4052-4054, XP011030918, ISSN: 0018-9464, DOI: 10.1109/20.539260

## Description

The invention relates to a process for obtaining a binder used for impregnating mineral fibers, particularly glass and basalt fibers used as insulating materials, to the binder such as may be obtained by this process and to the use thereof.

There is known the worldwide preoccupation to substitute the phenol-formaldehyde resin-containing binders and the phenol-formaldehyde-urea containing binders used for obtaining insulation materials, such as the ones based on glass fibers, due to formaldehyde emissions during manufacturing the resin and during the use thereof or of the products containing it.

The fibers may be glass, rock wool, cellulose, wool, jute, polyester, acrylic, nylon, polyamide, fibers. As used herein, the term "glass fiber" is intended to embrace heat-resistant fibers suitable for withstanding elevated temperatures such as mineral fibers, aramid fibers, ceramic fibers, metal fibers, carbon fibers, polyimide fibers, rayon fibers, and especially glass and basalt fibers.

Fiberglass insulation products consist of glass fibers bonded together with covalently crosslinked (cured) binder resins. Processes for making fiberglass insulation generally include drawing molten streams of glass to spinning wheels where they are spun into thin fibers by centrifugal forces. The fibers are then blown into a forming chamber, sprayed with an aqueous binder and deposited as a mat onto a travelling conveyor. Thereafter, the coated mat is transferred to a curing oven where heated air is blown through the mat to cure the binder and rigidly bond the glass fibers together.

Fiberglass binders used in the present sense should not be confused with matrix resins which are an entirely different and non-analogous field of art. While sometimes termed "binders," matrix resins act to fill the entire interstitial space between fibers or other fillers, resulting in a dense, fiber or filler reinforced structure, whereas "binder resins" as used herein are not space-filling, but rather coat only the fibers, and/or the junctions of fibers.

To this effect, there already exists a rich literature relating to obtaining the binders which do not contain formaldehyde.

Thus, in US patent 6,849,683 B2 there is presented a process for obtaining a binder for mineral wool-based products, which comprises the stages of: mixing, under reaction conditions, a carboxylic acid with an alkanolamine, wherein the carboxylic acid is a di-, tri- or tetracarboxylic acid to obtain a resin, which is subsequently mixed with a polymer containing carboxylic acid groups, such as a polyacrylic acid polymer or copolymer, polymethacrylic acid, polymaleic acid or copolymers thereof.

In EP 1 047 645 B1 there is presented a process for the preparation of a resin for a water soluble binder, which comprises the stages of mixing, under the reaction conditions, a cyclic anhydride with an alcanolamine selected from di- and triethanolamine or mixtures thereof, said resin being additivated with usual additives.

In WO 94/22671 there is described a binder as emulsion, used for nonwoven products, which contains 12 - 35% polyvinyl alcohol with low molecular weight and wherein at least 75% of the polyvinyl alcohol is hydrolyzed to at least 98% mol and 65-88% monomer selected from the group consisting of vinyl monomer, acryl monomer and mixtures thereof, grafted to the polyvinyl alcohol by emulsion polymerization. The vinyl and/or acryl monomer is selected from acrylate and methacrylate esters, vinyl acetate, styrene, acrylamide and mixtures thereof.

In US5498658 there is presented a formaldehyde-free latex for use as a fiber binder comprising an interpolymer comprising at least an olefinically unsaturated monomer having a nucleophilic group, an olefinically unsaturated dicarboxylic acid monomer and (meth)acrylonitrile.

The remaining problem solved by the invention consists in that the binder should ensure, upon application to a support and curing, a good adherence and provide the mineral fibers impregnated with binder respectively the webs made with cured binder both dimensional stability and tensile strength whilst exhibiting a pH in a range not raising problems in respect of corrosion in use.

In one aspect, the technical problem is solved by a process which comprises the steps of:
{a} obtaining a partly acetalyzed polyvinyl alcohol, preferably with an acetalization degree of 18-22% such as by the acetalization reaction of the polyvinyl alcohol (PVOH) with an aldehyde preferably selected from the group of acetaldehyde, propionaldehyde and butyraldehyde, optionally in the presence of the acetalization catalyst, preferably an inorganic acid even more preferably selected from the group consisting of sulfuric acid, phosphoric acid and hydrochloric acid. The reaction may be run for 4 to 5 hours, preferably at a temperature of between 40°C and 70°C.
   The PVOH may have a viscosity of up to 10 centipoise in a 4wt% aqueous solution at 20°C. The PVOH may have a number average molecular weight (as measured by light scattering) of greater than 7,000, such as in the range of 12,000 to 85,000.
   Whilst polyvinyl alcohol is a preferred embodiment, it may be partly or fully replaced by one or more hydroxyl-containing polymers, such as - without limitation - starches or sugars, and/or modifications thereof.
{b} obtaining a styrene - maleic anhydride - butyl acrylate ter-copolymer, preferably having a styrene : maleic anhydride : butyl acrylate molar ratio in the range of 1 to 3 moles of maleic anhydride and 0.5 to 1 moles of butyl acrylate, both relative to one mole of styrene. The ter-copolymer may be further functionalized by the reaction with hydroxyl group containing compounds, such as polyols or hydroxylamine, preferably at ambient temperature. The resulting ter-copolymer may exhibit a maximum viscosity of 50 sec, with the 8 mm diameter cup, according to ISO 2431 / ASTM D5125.
   Whilst styrene is a preferred embodiment of the present invention, it may be partly or fully replaced by other vinyl aromatic monomers, such as without limitation methyl styrene, ethyl styrene, butyl styrene, or dimethyl styrene.
   Whilst maleic anhydride is a preferred embodiment, it may be replaced by other carboxy containing agents, such as without any limitation maleic acid, succinic acid, citric acid, phthalic acid, glutaric acid, oxalic acid, adipic acid, tartaric acid, aspartic acid, malic acid and the like as well as respective anhydrides.
   Whilst butyl acrylate is a preferred compound, other acrylic compounds selected from the group consisting of isobutyl acrylate, isopentyl acrylate, pentyl acrylate, and N-isopropyl acrylamide may be employed.
{c} obtaining an acrylic acid - acrylonitrile copolymer, such as by radical polymerization, preferably at an acrylic acid : acrylonitrile molar ratio of 2 : 1.
{d} followed by mixing, under stirring, a predetermined amount of the previously obtained polymers.
{e} adding further additives, such as antimony-containing compounds such as antimony oxide, and/or titanium dioxide, preferably nano-titanium oxide. These additives are preferably added each at levels of less than 1%. The thus formed mixture may be further stirred, such as for 30 minutes.

The resulting binder may be an aqueous solution having a reddish-yellowish up to reddish- brown colour. Preferably, it exhibits a pH ranging from 5 to 7 and a viscosity of from 8 to 144 sec with the 8 mm diameter cup, according to ISO 2431 / ASTM D5125.

In a second aspect, the invention relates to a binder for impregnating mineral fibers, which may be obtained by the process described herein, and which comprises:
{a} up to 20 parts by weight of polyvinyl alcohol, preferably partly acetalized such as with an aldehyde preferably selected from the group consisting of acetaldehyde, propionaldehyde, and butyraldehyde, preferably having an acetalization degree of from 18 to 22%, optionally in the presence of an acetalization catalyst, preferably an inorganic acid even more preferably selected from the group consisting of sulfuric acid, phosphoric acid and hydrochloric acid.
   The reaction may be run for 4 - 5 hours, preferably at a temperature of between 40°C and 70°C.
   The PVOH may have a viscosity of up to 10 centipoise in a 4 wt% aqueous solution at 20°C. The PVOH may have a number average molecular weight (as measured by light scattering) of greater than 7,000, such as in the range of 12,000 to 85,000.
   Whilst polyvinyl alcohol is a preferred embodiment, it may be partly or fully replaced by one or more hydroxyl-containing polymers, such as - without limitation - starches or sugars, and/or modifications thereof.
{b} up to 100 parts by weight of styrene-maleic anhydride - butyl acrylate terpolymer, preferably having a styrene : maleic anhydride : butyl acrylate molar ratio in the range of 1 to 3 moles of maleic anhydride and 0.5 to 1 moles of butyl acrylate, both relative to one mole of styrene. The ter-copolymer may be further functionalized by the reaction with hydroxyl groups compounds, such as polyols or hydroxylamines; preferably at ambient temperature. The resulting ter-copolymer may exhibit a viscosity of up to 50 sec, with the ϕ=8 mm diameter cup, according to ISO 2431 / ASTM D5125.
   Whilst styrene is a preferred embodiment of the present invention, it may be partly or fully replaced by other vinyl aromatic monomers, such as without limitation methyl styrene, ethyl styrene, butyl styrene, or dimethyl styrene.
   Whilst maleic anhydride is a preferred embodiment, it may be replaced by other carboxy containing agents, such as without any limitation maleic acid, succinic acid, citric acid, phthalic acid, glutaric acid, oxalic acid, adipic acid, tartaric acid, aspartic acid, malic acid as well as respective anhydrides.
{c} up to 80 parts by weight of acrylic acid - acrylonitrile copolymer which may be obtained by the radical polymerization, such as at an acrylic acid : acrylonitrile molar ratio of 2 : 1.
{e} water may be added to adjust the solid matter content between 35% and 40% of the copolymer.
   Further, plasticizing agent may be added, such as by adding between 1 % and 3% by weight, related to the solid matter content of the binder, plasticizing agent content. Optionally up to maximum 1%, related to the solid matter content of the binder, stabilizer may be added.
   The resulting binder may be an aqueous solution, which may show a reddish - yellowish up to reddish-brown colour and which may exhibit a pH of between 5 and 7 and a viscosity of from 8 to 144 seconds with the ϕ=8 mm diameter cup, according to ISO 2431 / ASTM D5125

According to the invention, the binder may possibly further contain additives for improving the flame retardancy respectively fire resistance, such as urea, melamine, dicyandiamide, or derivatives thereof, such as melamine phosphates, ammoniumphosphates, tripolyphosphates. Other suitable flame retardants may be sodium carbonate, boric acid salts or derivatives thereof, or water release agents such as aluminium oxide, trihydrate or magnesium hydroxide. In a particular execution up to 1% antimony-containing compounds such as antimony oxides may be added. Further, up to 1% nano-titanium dioxide can be employed for improving the degree of adherence to the fibers.

As agents for plasticizing and increasing the adherence to the support there are used silane derivatives, such as aminosilane.

The invention presents the following advantages:
- the products obtained from glass fibers with binder as claimed by the invention have good dimensional stability and stretching resistance;
- the binder, due to the low basic pH has no corrosive action upon the installations wherein it is used and stored.
- the process claimed by the invention is easy to be carried out;
- the obtained binder has a good adherence to mineral fibers, particularly to glass fibers and basalt fibers;

In order to obtain the partly acetalized polyvinyl alcohol the vinyl acetate may be homopolymerized in the presence of radical initiator, such as azoizobutyronitrile or benzoyl peroxide, such as at a temperature of between 58°C and 80°C, for 12 hours. This may be followed by hydrolysis in the presence of NaOH methanol solution, such as in a weight ratio between the reaction mixture to the NaOH methanol solution of 3/1 up to 8/1, and up to a saponification index of from 100 to 180 mg KOH/g. Upon reaching the desired saponification index the hydrolysis may be stopped such as with an acetic acid solution and then the resulting methanol suspension may be diluted with water up to a solid matter content of 20 - 40% by weight. Thereafter, the methanol can be removed, such as by distillation, and the result may be subjected to the acetalization reaction such as with the aldehyde, preferably selected from the group consisting of acetaldehyde, propionaldehyde and butyraldehyde. This may be executed in the presence of mineral acid, such as sulfuric acid, phosphoric acid or hydrochloric acid, preferably 15 -20% concentration sulfuric acid, for 4 to 5 hours, at a temperature of between 40 and 70°C. The partly acetalized product preferably has an acetalization degree of 18-22% and may be in the form of a slightly opalescent yellow-brown coloured solution. The solid matter content is preferably less than about 25%, and the product may be used further on as such for obtaining the binder claimed by the invention.

Obtaining the styrene - maleic anhydride - butyl acrylate ter-copolymer may be carried out by radical copolymerization, such as in the presence of benzoyl peroxide, of a styrene - maleic anhydride - butyl acrylate mixture, in a styrene : maleic anhydride : butyl acrylate molar ratio of 1 to 3 moles of maleic anhydride and 0.5 to 1 moles of butyl acrylate, both relative to one mole of styrene. The reaction may be performed in a solvent, preferably an acetone and methyl ethyl ketone mixture, more preferably at a volume ratio between the two ketones being of 1 : 1. The reaction may take place for 2 to 6 hours, preferably at the solvent reflux temperature, such as may be less than 120°C. Then, the obtained ter-copolymer may be functionalized by reacting with hydroxyl group compounds, such as polyols or hydroxylamines, preferably at room temperature, up to reaching a viscosity of maximum 50 sec determined by the ϕ=8 mm diameter cup, according to ISO 2431 / ASTM D5125. Water may be added to the thus obtained reaction mixture. Thereafter the solvent is removed such as by employing vacuum. The result is an aqueous solution of functionalized styrene - maleic anhydride - butyl acrylate ter-copolymer which is used as such for obtaining the binder claimed by the invention.

Obtaining the acrylonitrile-acrylic acid copolymer may be carried out by emulsion copolymerization of an acrylic acid and acrylonitrile mixture, preferably at an acrylic acid : acrylonitrile molar ratio of 2 : 1, preferably in the presence of potassium persulphate as initiator, such as at a temperature of about 80°C, for 2.5 hours, followed by neutralization such as with NaOH solution up to a pH of about 7.

All percentages or "parts" as referred to herein without further explanation are based on dry matter of the curable resin.

All viscosity measurements are performed according to ISO 2431 / ASTM D5125, with a cup having diameter ϕ of 8 mm

In the following there will be presented 3 concrete embodiments of the invention having the role of illustrating the invention without limiting it to these embodiments.

### Example 1

According to the first embodiment, in a vessel provided with a stirrer, heating/cooling shell there are introduced 50 parts by weight vinyl acetate, 100 parts by weight methanol and 10 parts by weight of benzoyl peroxide, and the obtained mixture is stirred at the room temperature. Then, the temperature is raised and maintained, for 12 hours, within the range from 58 to 80°C, thereafter the obtained reaction mixture is hydrolyzed on a double screw mixer made of stainless steel, with a methanol solution containing 10% NaOH, the ratio between the reaction mixture and methanol solution being of 5/1. The hydrolysis is continued up to obtaining a saponification index of 130 mg KOH/g when the hydrolysis reaction is stopped with a 30% concentration acetic acid solution. There is obtained partly hydrolyzed polyvinyl alcohol as methanol suspension which is diluted with water up to a 30% solid matter content, and this is introduced then in an acetalization reactor wherein methanol is removed by distillation. Then an aqueous 20% concentration sulphuric acid solution, as acetalization catalyst, is introduced into the vessel, up to reaching a pH of between 3 and 4, followed by acetaldehyde dosing in an amount of 5.5% by weight, related to the polyvinyl alcohol, and the mixture is maintained to a temperature of 60 ±5°C, for 4 to 5 hours. There is obtained partly acetalized polyvinyl alcohol as a slightly opalescent yellow-brown coloured solution, with a solid matter content of about 20% which is thereafter used as such for obtaining the binder as claimed by the invention.

For obtaining the functionalized styrene - maleic anhydride - butyl acrylate ter-copolymer, 50 parts by weight of a mixture consisting of acetone and methyl ethyl ketone, in a volume ratio of 1 : 1 and 0.7 parts by weight benzoyl peroxide (POB) are introduced into a polymerization reactor provided with stirring, refrigerating condenser and heating shell. From a dosing vessel there are introduced 10 parts by weight of styrene - maleic anhydride : butyl acrylate mixture, in a styrene : maleic anhydride : butyl acrylate molar ratio of 1 : 2 : 1, in a solvent formed from the above-mentioned ketone mixture, for 4 hours, at the reflux temperature. After finishing adding the monomers, triethanolamine in an amount of 30% as compared to the terpolymer solution weight is introduced with a view to functionalizing the obtained ter-copolymer, through the dosing vessel, and stirring is continued up to reaching a viscosity of maximum 50 sec, determined by the 8 mm diameter cup, according to ISO 2431 / ASTM D5125., when 150 parts by weight water are introduced and then the vacuum is started for removing the solvent. The obtained aqueous solution is used as such for obtaining the binder as claimed by the invention.

For obtaining the acrylonitrile - acrylic acid copolymer, 60 parts by weight water, 1 part by weight potassium persulphate are introduced into a polymerization vessel provided with stirrer and heating/cooling shell and are stirred at the room temperature. In another vessel hereinafter called emulsion vessel there are introduced 60 parts by weight acrylic acid, 30 parts by weight water, 30 parts by weight acrylonitrile, 1 part by weight polyvinyl alcohol with 88 to 92% hydrolysis degree, as surface active agent, and about 10% of the emulsion thus obtained is dosed into the polymerization vessel and it is maintained at 80°C, for 30 minutes, to prepolymerization. Then there are concomitantly dosed, for about 2 hours, the remaining monomer emulsion and an aqueous solution of potassium persulphate also obtained from 60 parts by weight water and 1 part by weight potassium persulphate. Then the reaction mass is cooled to 40°C and an aqueous solution of NaOH is added until reaching a pH of about 7. The obtained solution has a solid matter content of about 30% and is used as such for obtaining the binder as claimed by the invention.

The solutions of the copolymers obtained above are mixed, while stirring, in the following amounts by weight: 80 parts by weight functionalized styrene-maleic anhydride - butyl acrylate terpolymer; 5 parts by weight partly acetalized polyvinyl alcohol; 1 part by weight acrylonitrile - acrylic acid copolymer and water up to a solid matter content of 36%, then the mixture thus obtained is additivated, while stirring, with 2%, related to the solid matter content, of aminosilan as an agent for plasticizing and increasing the adherence to the support and 0.7%, related to the solid matter content, of phenol stabilizer. The stirring is continued for 30 minutes then the desired product is obtained as aqueous solution having a colour varying from reddish-yellowish up to reddish-brown, a pH of between 5 and 7 and a viscosity of between 8 and 144 sec with the 8 mm diameter cup, according to ISO 2431 / ASTM D5125.

### Example 2

It was proceeded similarly to Example 1, except that 80 parts by weight of styrene-maleic anhydride - butyl acrylate ter-copolymer solution was mixed with 2 parts by weight of partly acetalized polyvinyl alcohol and water up to a solid matter content of 35%, then the resulting mixture was additivated with 2%, related to the solid matter content, of aminosilan as plasticizing agent and 0.7%, related to the solid matter content, of phenol stabilizer. The obtained product is in the form of an aqueous reddish -brown coloured solution, with a pH of about 6.8 and a viscosity of 13 sec with the 8 mm diameter cup, according to ISO 2431 / ASTM D5125.

### Example 3

It was proceeded similarly to the Example 1, except that there were mixed 80 parts by weight of acrylonitrile - acrylic acid copolymer solution, 15 parts by weight of partly acetalized polyvinyl alcohol and water up to a solid matter content of 36%, then the resulting mixture was additivated with 2%, related to the solid matter content, of aminosilan as plasticizing agent and 0.7%, related to the solid matter content, of phenol stabilizer. The obtained product is in the form of a reddish -yellowish coloured aqueous solution, with a pH of about 6.7 and a viscosity of 144 sec with the 8 mm diameter cup, according to ISO 2431 / ASTM D5125.

### Invention applicability

The binders synthesized in Examples 1 - 3 were deposited by spraying onto glass fibers, in an amount of 3% by weight, related to the finished product, then the thus resulting material was maintained at between 200°C and 220°C, for between 1 and 5 minutes, in a drying cabinet for crosslinking the binder. From the obtained material there were taken samples for test, which were evaluated with regard to the dimensional stability and tensile strength, lengthwise and in perpendicular direction, after aging at 70±2°C and relative humidity of 95±5%, for 168 hours. For each determined parameter there was used a number of three samples, the values in the Table representing the determined average value.

The results are presented in Table 1.

**Table 1. Modifications of size and of the tensile strength**

| **No.** | **Sample of Example No.** | **ADC, %** | **PDC,%** | **ATSC, %** | **PTSC,%** |
|---|---|---|---|---|---|
| 1. | **1** | 3.15±0.5 | 7.4±0.8 | 8.13±0.27 | 11.15±2.12 |
| 2. | **2** | 5.02±1.3 | 8.22±1.1 | 7.22±2.2 | 13.24±3.2 |
| 3. | **3** | 4.44±0.7 | 6.84±2.2 | 5.55±0.3 | 14.22±0.5 |

The significance of the parameters in the table is the following:
- **ADC, %**: represents the percentage size modification, lengthwise, as a consequence of aging
- **PDC, %**: represents the percentage size modification, in perpendicular direction, as a consequence of aging
- **ATSC, %**: represents the percentage stretching resistance modification lengthwise, as a consequence of aging
- **PTSC, %**: represents the percentage stretching resistance modification, in the perpendicular direction as a consequence of aging.

It results from the data presented in the table that the articles made from glass fibers impregnated with the binder claimed by the invention presents, as a consequence of aging, a good dimensional stability both in longitudinal and transverse direction, as well as a good stability of the tensile strength.

## Claims

1. A process for obtaining a polymeric binder for impregnating fibers, **characterized in that** it comprises the steps of
{a} obtaining a partly acetalized polyhydroxy polymer, preferably polyvinyl alcohol,
{b} obtaining a ter-copolymer, of
(b1) a vinyl aromatic monomer,
(b2) a carboxy containing compound,
(b3) an acrylic compound selected from the group consisting of Isobutyl acrylate, isopentyl
acrylate, pentyl acrylate, N-isopropyl acrylamide and butyl acrylate, preferably butyl acrylate;
{c} obtaining an acrylic acid - acrylonitrile copolymer;
{d} followed by mixing, while stirring, in predetermined amounts, the previously obtained polymers, whereby the resulting curable binder is an aqueous solution.

2. The process according to claim 1, wherein the partly acetalized polyhydroxy polymer has an acetalizing degree of 18-22% and is obtained by the reaction of acetalising the polyhydroxy polymer with an aldehyde.

3. The process according to claims 1 or 2, wherein the partly acetalized polyhydroxy polymer is a polyvinyl alcohol and the aldehyde is selected from the group consisting of acetaldehyde, propionaldehyde and butyraldehyde.

4. The process according to any one of claims 1-3, wherein the reaction of acetalizing is done in the presence of acetalizing catalyst, preferably an inorganic acid, preferably selected from the group consisting of sulfuric acid, phosphoric acid and hydrochloric acid.

5. The process according to any one of claims 1-4, wherein the vinyl aromatic monomer (b1) is styrene.

6. The process according to any one of claims 1-5, wherein the carboxy containing compound (b2) is an unsaturated di-carboxylic acid or anhydride thereof, preferably maleic anhydride.

7. The process according to any one of claims 1-6, wherein in step {b} the ter-copolymer has a (b1) : (b2) : (b3) molar ratio in the range of 1 to 3 moles of the carboxy containing compound (b2), and 0.5 to 1 moles of the acrylic compound (b3), both relative to one mole of (b1), the vinyl aromatic monomer, such as styrene.

8. The process according to any one of claims 1-7, wherein the terpolymer is functionalized by the reaction with hydroxyl groups compounds, preferably polyols or hydroxylamines, preferably at the room temperature, preferably up to reaching a viscosity of maximum 50 sec, measured with a 8 mm diameter cup according to ISO 2431 / ASTM 05125.

9. The process according to any one of claims 1-8, wherein the acrylic acid-acrylonitrile copolymer in step {c} is obtained by radical polymerization, preferably at an acrylic acid : acrylonitrile molar ratio of 2:1.

10. A curable binder for impregnating mineral fibers obtainable by the process according to anyone of claims 1 - 9.

11. A curable binder for impregnating mineral fibers, **characterized in that** it comprises
{a} up to 20 parts by weight partly acetalized polyhydroxy polymer, preferably polyvinyl alcohol, preferably having an acetalizing degree of 18 to 22%;
{b} up to 100 parts by weight of a ter-copolymer of
(b1) a vinyl aromatic monomer,
(b2) a carboxy containing compound,
(b3) an acrylic compound selected from the group consisting of isobutyl acrylate,
isopentyl acrylate, pentyl acrylate, N-isopropyl acrylamide butyl acrylate, preferably butyl acrylate, preferably functionalized by the reaction with hydroxyl groups compounds, such as polyols or hydroxylamines;
{c} up to 80% by weight acrylic acid-acrylonitrile copolymer;
{e} water up to a solid matter content of between 35% and 40%,
{f} and from 1 to 3% by weight, related to a solid matter content, of plasticizing agent and/or up
to maximum 1%, related to the solid matter content, stabilizer,
wherein said curable binder is in the form of an aqueous solution.

12. The curable binder according to claims 10-11 having a pH of between 5 and 7 and a viscosity of between 8 and 144 sec. with the 8 mm diameter cup according to ISO 2431 / ASTM 05125.

13. The curable binder according to claims 10 - 12, further comprising flame retardancy additives are selected from the group consisting of urea, melamine, dicyandiamide, sodium carbonate, boric acid salts, antimony-containing compounds and derivatives of these, and water release agents, preferably aluminium oxide, trihydrate or magnesium hydroxide and optionally up to 1% nano titanium dioxide.

14. Use of the binder according to claims 10 - 13 for impregnating mineral fibers, preferably glass
fibers or basalt fibers.

15. Mineral fibers bonded by a cured binder according to any one of claims 10-13.

## Patentansprüche

1. Verfahren zum Erhalten eines polymeren Bindemittels zum Imprägnieren von Fasern, **dadurch gekennzeichnet, dass** es die folgenden Schritte umfasst:
{a} Erhalten eines teilweise acetalisierten Polyhydroxypolymers, vorzugsweise Polyvinylalkohol,
{b} Erhalten eines ter-Copolymers aus
(b1) einem vinylaromatischen Monomer,
(b2) einer Carboxy-enthaltenden Verbindung,
(b3) einer acrylischen Verbindung ausgewählt aus der Gruppe bestehend aus Isobutylacrylat, Isopentylacrylat, Pentylacrylat, N-Isopropylacrylamid und Butylacrylat, vorzugsweise Butylacrylat;
{c} Erhalten eines Acrylsäure-Acrylnitril Copolymers;
{d} gefolgt von Mischen unter Rühren der zuvor erhaltenen Polymere in vorbestimmten Mengen, wobei das resultierende härtende Bindemittel eine wässrige Lösung ist.

2. Verfahren nach Anspruch 1, wobei das teilweise acetalisierte Polyhydroxypolymer einen Acetalisierungsgrad von 18-22% aufweist und durch die Acetalisierungsreaktion des Polyhydroxypolymers mit einem Aldehyd erhalten wird.

3. Verfahren nach einem der Ansprüche 1 oder 2, wobei das teilweise acetalisierte Polyhydroxypolymer ein Polyvinylalkohol ist und der Aldehyd ausgewählt wird aus der Gruppe bestehend aus Acetaldehyd, Propionaldehyd und Butyraldehyd.

4. Verfahren nach einem der Ansprüche 1-3, wobei die Acetalisierungsreaktion in der Gegenwart eines acetalisierenden Katalysators durchgeführt wird, vorzugsweise einer anorganischen Säure, vorzugsweise ausgewählt aus der Gruppe bestehend aus Schwefelsäure, Phosphorsäure und Salzsäure.

5. Verfahren nach einem der Ansprüche 1-4, wobei das vinylaromatische Monomer (b1) Styrol ist.

6. Verfahren nach einem der Ansprüche 1-5, wobei die Carboxy-enthaltende Verbindung (b2) eine ungesättigte Dicarbonsäure ist oder ein Anhydrid davon, vorzugsweise Maleinsäureanhydrid.

7. Verfahren nach einem der Ansprüche 1-6, wobei das ter-Copolymer in Schritt {b} ein (b1) : (b2) : (b3) molares Verhältnis im Bereich von 1 bis 3 Mol der Carboxy-enthaltenden Verbindung (b2) und 0,5 bis 1 Mol der acrylischen Verbindung (b3) aufweist, jeweils bezogen auf ein Mol (b1), das vinylaromatische Monomer, wie etwa Styrol.

8. Verfahren nach einem der Ansprüche 1-7, wobei das terPolymer durch die Reaktion mit Hydroxylgruppen-Verbindungen funktionalisiert wird, vorzugsweise Polyolen oder Hydroxylaminen, vorzugsweise bei Raumtemperatur, vorzugsweise bis zum Erzielen einer Viskosität von maximal 50 Sek., gemessen mit einem Becher von 8 mm Durchmesser nach ISO 2431 / ASTM 05125.

9. Verfahren nach einem der Ansprüche 1-8, wobei das Acrylsäure-Acrylnitril Copolymer in Schritt {c} durch radikalische Polymerisation erhalten wird, vorzugsweise bei einem molaren Verhältnis Acrylsäure:Acrylnitril von 2:1.

10. Härtendes Bindemittel zum Imprägnieren von Mineralfasern erhältlich durch das Verfahren nach einem der Ansprüche 1-9.

11. Härtendes Bindemittel zum Imprägnieren von Mineralfasern **dadurch gekennzeichnet, dass** es Folgendes umfasst:
{a} bis zu 20 Gewichtsanteile eines teilweise acetalisierten Polyhydroxypolymers, vorzugsweise Polyvinylalkohol, vorzugsweise mit einem Acetalisierungsgrad von 18-22%;
{b} bis zu 100 Gewichtsanteile eines ter-Copolymers aus
(b1) einem vinylaromatischen Monomer,
(b2) einer Carboxy-enthaltenden Verbindung,
(b3) einer acrylischen Verbindung ausgewählt aus der Gruppe bestehend aus Isobutylacrylat, Isopentylacrylat, Pentylacrylat, N-Isopropylacrylamid, Butylacrylat, vorzugsweise Butylacrylat; vorzugsweise funktionalisiert durch die Reaktion mit Hydroxylgruppen-Verbindungen, wie etwa Polyolen oder Hydroxylaminen;
{c} bis zu 80 Gew.% eines Acrylsäure-Acrylnitril Copolymers;
{d} Wasser bis zu einem Feststoffgehalt zwischen 35% und 40%;
{e} und 1 bis 3 Gew.%, bezogen auf einen Feststoffgehalt, eines Plastifikators und/oder bis zu einem Maximum von 1%, bezogen auf den Feststoffgehalt, eines Stabilisators,
wobei das härtende Bindemittel in Form einer wässrigen Lösung vorliegt.

12. Härtendes Bindemittel nach den Ansprüchen 10-11, der einen pH-Wert zwischen 5 und 7 aufweist und eine Viskosität zwischen 6 und 144 Sek. mit dem Becher von 8 mm Durchmesser nach ISO 2431 / ASTM 05125.

13. Härtendes Bindemittel nach den Ansprüchen 10-12, der ferner flammfeste Zusätze umfasst, die ausgewählt sind aus der Gruppe bestehend aus Harnstoff, Melamin, Dicyandiamid, Natriumcarbonat, Borsäuresalze, Antimon enthaltende Verbindungen und deren Derivate sowie Wasser freisetzende Mittel, vorzugsweise Aluminiumoxid-Trihydrat oder Magnesiumhydroxid und wahlweise bis zu 1% Nano-Titandioxid.

14. Verwendung eines Bindemittels nach den Ansprüchen 10-13 zum Imprägnieren von Mineralfasern, vorzugsweise Glasfasern oder Basaltfasern.

15. Mineralfasern, die durch ein ausgehärtetes Bindemittel nach einem der Ansprüche 10-13 verbunden sind.

## Revendications

1. Procédé d'obtention d'un liant polymérique pour des fibres imprégnées, **caractérisé en ce qu'**il comprend les étapes consistant à
{a} obtenir un polymère polyhydroxylique partiellement acétalisé, de préférence un alcool polyvinylique,
{b} obtenir un ter-copolymère de
(b1) un monomère aromatique vinylique,
(b2) un composé contenant un carboxy,
(b3) un composé acrylique choisi parmi le groupe
constitué de l'acrylate d'isobutyle, de l'acrylate d'isopentyle, du N-isopropylacrylamide et de l'acrylate de butyle, de préférence de l'acrylate de butyle,
{c} obtenir un acide acrylique - copolymère acrylonitrilique ;
{d} suivi du mélange, tout en remuant, dans des quantités prédéterminées, des polymères obtenus précédemment, selon lequel le liant durcissable qui en résulte est une solution aqueuse.

2. Procédé selon la revendication 1, dans lequel le polymère polyhydroxylique partiellement acétalisé possède un degré d'acétalisation allant de 18 à 22 % et est obtenu à l'aide de la réaction d'acétalisation du polymère polyhydroxylique avec un aldéhyde.

3. Procédé selon la revendication 1 ou la revendication 2, dans lequel le polymère polyhydroxylique partiellement acétalisé est un alcool polyvinylique et l'aldéhyde est choisi parmi le groupe constitué de l'acétaldéhyde, du propionaldéhyde et du butyraldéhyde.

4. Procédé selon l'une quelconque des revendications 1 à 3, dans lequel la réaction d'acétalisation est effectuée en présence d'un catalyseur d'acétalisation, de préférence un acide inorganique, de préférence choisi parmi le groupe constitué de l'acide sulfurique, de l'acide phosphorique et l'acide chlorhydrique.

5. Procédé selon l'une quelconque des revendications 1 à 4, dans lequel le monomère aromatique vinylique (b1) est le styrène.

6. Procédé selon l'une quelconque des revendications 1 à 5, dans lequel le composé contenant un carboxy (b2) est un acide dicarboxylique insaturé ou un anhydride de celui-ci, de préférence l'anhydride maléique.

7. Procédé selon l'une quelconque des revendications 1 à 6, dans lequel dans l'étape {b} le ter-polymère possède un rapport molaire de (b1): (b2) : (b3) compris dans la gamme allant de 1 à 3 moles de composé contenant un carboxy (b2), et de 0,5 à 1 mole de composé acrylique (b3), tous les deux par rapport à une mole de (b1), le monomère aromatique vinylique tel que le styrène.

8. Procédé selon l'une quelconque des revendications 1 à 7, dans lequel le ter-polymère est fonctionnalisé par la réaction avec les composés contenant des groupes hydroxyle, de préférences des polyols ou des hydroxylamines, de préférence à température ambiante, de préférence jusqu'à obtenir une viscosité maximale de 50 secondes, mesurée à l'aide d'une cupule possédant un diamètre de 8 mm selon les normes ISO 2431 / ASTM 05125.

9. Procédé selon l'une quelconque des revendications 1 à 8, dans lequel l'acide acrylique - copolymère acrylonitrilique de l'étape {c} est obtenu par polymérisation radicalaire, de préférence à un rapport molaire d'acide acrylique : acrylonitrile de 2 : 1.

10. Liant durcissable pour imprégner des fibres minérales pouvant être obtenu à l'aide du procédé selon l'une quelconques des revendications 1 à 9.

11. Liant durcissable pour imprégner des fibres minérales, **caractérisé en ce qu'**il comprend
{a} jusqu'à 20 parties en poids d'un polymère polyhydroxylique partiellement acétalisé, de préférence un alcool polyvinylique, de préférence possédant un degré d'acétalisation allant de 18 à 22 %,
{b} jusqu'à 100 parties en poids d'un un ter-copolymère de
(b1) un monomère aromatique vinylique,
(b2) un composé contenant un carboxy,
(b3) un composé acrylique choisi parmi le groupe
constitué de l'acrylate d'isobutyle, de l'acrylate d'isopentyle, du N-isopropylacrylamide et de l'acrylate de butyle, de préférence de l'acrylate de butyle, de préférence fonctionnalisé par la réaction avec les composés contenant des groupes hydroxyle, tels que des polyols ou des hydroxylamines ;
{c} jusqu'à 80 % en poids d'un acide acrylique-copolymère acrylonitrilique ;
{d} de l'eau jusqu'à une teneur en matières solides comprise entre 35 % et 40 %,
{e} et de 1 à 3 % en poids, par rapport à une teneur en matières solides, d'agent plastifiant et/ou jusqu'à un maximum de 1 %, par rapport à la teneur en matières solides, de stabilisateur,
dans lequel ledit liant durcissable est sous la forme d'une solution aqueuse.

12. Liant durcissable selon la revendication 10 ou la revendication 11 possédant un pH compris entre 5 et 7 et une viscosité comprise entre 8 et 144 secondes à l'aide de la cupule possédant un diamètre de 8 mm selon les normes ISO 2431 / ASTM 05125.

13. Liant durcissable selon les revendications 10 à 12, comprenant en outre des additifs d'ignifugation choisis parmi le groupe constitué de l'urée, de la mélamine, du dicyandiamide, du carbonate de sodium, des sels de l'acide borique, de composés et de dérivés de ceux-ci contenant de l'antimoine, et des agents libérateurs d'eau, de préférence l'oxyde d'aluminium, le trihydrate ou l'hydroxyde de magnésium et éventuellement jusqu'à 1 % de nano dioxyde de titane.

14. Utilisation du liant selon les revendications 10 à 13 pour imprégner des fibres minérales, de préférence des fibres de verre ou des fibres de basalte.

15. Fibres minérales liées par un liant durcissable selon l'une quelconque des revendications 10 à 13.
